# FASCICULE DE BREVET EUROPEEN

(11) **EP 3 317 697 B1**
(45) Date de publication et mention de la délivrance du brevet: **29.12.2021**
(21) Numéro de dépôt: 16739213.3
(22) Date de dépôt: 10.06.2016
(51) Int. Cl.: G01T 1/20

(54) **LECTEUR DE PLAQUES PHOSPHORESCENTES**
LESER FÜR PHOSPHORESZIERENDE PLATTE
PHOSPHORESCENT PLATE READER

(30) Priorité: 02.07.2015 FR 1556282
(43) Date de publication de la demande: 09.05.2018
(73) Titulaire: INNIXIM, 94000 Creteil (FR)
(72) Inventeur: METZ, Matthieu, 91330 Yerres (FR); AUGAIS, Guillaume, 75012 Paris (FR)
(74) Mandataire: Ostertag & Partner Patentanwälte mbB
(86) Numéro de dépôt international: PCT/FR2016/051411
(87) Numéro de publication internationale: WO 2017/001737

(56) Documents cités:
- EP-A1- 0 599 481
- US-A- 4 749 861
- US-A- 4 933 558
- US-A- 5 578 835
- US-A1- 2002 036 277
- US-B2- 6 765 225

## Description

La présente invention concerne un lecteur de plaques phosphorescentes, notamment pour utilisation dans le domaine médical de la radiographie numérisée (CR pour «Computed Radiography» en anglais).

Une plaque phosphorescente a la fonction de conserver une image qui est imprimée - désigné dans la suite par enregistrée - dans cette plaque par un rayonnement d'enregistrement, par exemple un rayonnement X, sous la forme d'électrons de la plaque qui ont été placés dans un état excité par le rayonnement d'enregistrement. Le nombre des électrons qui sont dans l'état excité à un endroit de la plaque est une fonction croissante de la quantité du rayonnement d'enregistrement qui a été reçue à cet endroit de la plaque. L'image résulte alors des variations de cette quantité reçue du rayonnement d'enregistrement entre des endroits différents de la plaque. Elle est donc enregistrée dans la plaque phosphorescente sous la forme de variations spatiales du nombre des électrons qui sont dans l'état excité.

La lecture de l'image procède alors par un apport d'énergie de stimulation, qui transfère les électrons de la plaque qui sont dans l'état excité après l'enregistrement, vers un état d'énergie encore supérieure mais qui est instable. Ces électrons reviennent alors spontanément dans leur état fondamental à partir de l'état instable, en émettant un rayonnement de phosphorescence. La saisie d'une image de la plaque qui est formée par ce rayonnement de phosphorescence est l'opération de lecture de la plaque.

Ainsi, par principe de la phosphorescence, lorsque l'énergie de stimulation est apportée sous la forme d'une lumière de stimulation, la longueur d'onde du rayonnement de phosphorescence est différente de celle de la lumière de stimulation, souvent plus courte que cette dernière. En particulier, pour certaines plaques phosphorescentes qui sont destinées à l'imagerie par rayonnement X, la lumière de stimulation est de la lumière rouge, correspondant à une longueur d'onde comprise entre 630 nm (nanomètre) et 700 nm environ, et le rayonnement de phosphorescence est de couleur bleue, correspondant à une longueur d'onde comprise entre 380 nm et 450 nm environ.

Le document EP 1 356 267 décrit plusieurs lecteurs de plaques phosphorescentes. En particulier, il décrit des lecteurs qui utilisent des galettes de fibres optiques pour collecter le rayonnement de phosphorescence, et des capteurs d'images matriciels à transfert de charges, couramment désignés par l'acronyme CCD pour «Charge-Coupled Device» en anglais, pour saisir l'image de lecture.

Le document US 2002/0036277 décrit un lecteur de plaques phosphorescentes dans lequel le rayonnement de phosphorescence, qui est détectée, provient la même bande de la plaque sur laquelle la lumière de stimulation s'imprime.

EP 0 599 481 A1 décrit un lecteur de plaques phosphorescentes qui comprend une caméra à décalage temporel et intégration montée pour visualiser une première partie d'une plaque au phosphore stimulable qui porte une image latente et une source de lumière pour illuminer une seconde partie de la plaque au phosphore stimulable qui est au moins partiellement coextensive avec la première partie.

A partir de cet art antérieur, un but de la présente invention est de proposer de nouveaux lecteurs de plaques phosphorescentes, qui améliorent le rendement de lecture. Dans le cadre de la présente invention, on appelle rendement de lecture pour une plaque phosphorescente le quotient du nombre de photons du rayonnement de phosphorescence qui sont détectés par le lecteur, sur le nombre d'électrons qui avaient été portés dans l'état excité lors de l'enregistrement de l'image dans la plaque phosphorescente, pour un même endroit dans cette plaque. Autrement dit, l'invention a pour but de proposer des lecteurs de plaques phosphorescentes qui ont une sensibilité de lecture améliorée.

D'autres buts de l'invention sont de proposer des lecteurs de plaques phosphorescentes pour lesquels l'une au moins des caractéristiques suivantes est améliorée : une durée de l'opération de lecture qui est courte, une résolution spatiale de lecture qui est plus fine, un prix de revient du lecteur qui est moins élevé, un encombrement du lecteur qui est limité et des modèles de lecteurs qui puissent être facilement adaptés pour des plaques phosphorescentes de largeurs variables.

Pour atteindre l'un au moins de ces buts ou d'autres, un premier aspect de l'invention propose un lecteur de plaques phosphorescentes qui comprend :
- des moyens de stimulation pour amener un flux d'énergie de stimulation sur toute une bande transversale d'une plaque phosphorescente en cours de lecture ;
- au moins une unité de lecture, comprenant une fenêtre d'entrée pour collecter un rayonnement de phosphorescence qui est produit par des portions de la plaque phosphorescente en réponse au flux d'énergie de stimulation, et comprenant en outre au moins un capteur d'image et un système optique qui est disposé pour transférer le rayonnement de phosphorescence à partir de la fenêtre d'entrée au capteur d'image ; et
- un mécanisme d'entraînement, qui est adapté pour guider et entraîner en translation la plaque en cours de lecture de sorte que cette plaque défile devant les moyens de stimulation et la fenêtre d'entrée de l'unité de lecture.

Ainsi, le capteur d'image saisit une image de toute la bande transversale de la plaque en cours de lecture pendant que la plaque est entrainée en translation, cette image étant formée par le rayonnement de phosphorescence. C'est notamment la lecture simultanée de toute cette bande transversale qui procure la rapidité de l'opération de lecture.

Selon une autre caractéristique de l'invention, le capteur d'image est du type capteur matriciel à décalage temporel et intégration (TDI pour «Time Delay Integration» en anglais). Le lecteur est alors adapté pour que le capteur d'image matriciel à décalage temporel et intégration ait une vitesse de transfert de ligne qui est parallèle et corrélée avec une vitesse d'entraînement de la plaque par le mécanisme d'entraînement.

Dans des premiers modes de réalisation de l'invention, les moyens de stimulation sont disposés en aval de la fenêtre d'entrée de l'unité de lecture par rapport à un sens de la translation de la plaque en cours de lecture, pour amener le flux d'énergie de stimulation sur la plaque sous la forme d'un faisceau de lumière de stimulation. Ce faisceau de lumière de stimulation est alors incident sur la plaque d'un même côté que l'unité de lecture, et diffuse simultanément dans toute la bande transversale de la plaque en cours de lecture jusqu'en amont de la fenêtre d'entrée de cette unité de lecture par rapport au sens de la translation de la plaque, le système optique comportant, à partir de la fenêtre d'entrée pour le rayonnement de phosphorescence, une galette de fibres optiques dont l'axe optique est perpendiculaire à la plaque en cours de lecture. Dans ce cas, les moyens de stimulation peuvent avantageusement être adaptés pour amener le faisceau de lumière de stimulation sur la plaque en cours de lecture avec un vecteur de propagation de ce faisceau qui est oblique en direction de la fenêtre d'entrée de l'unité de lecture, par rapport à une direction perpendiculaire à la plaque.

Etant donné que l'unité de lecture et les moyens de stimulation lumineuse sont d'un même côté de la plaque en cours de lecture, des plaques munies d'une face arrière qui est réfléchissante pour le rayonnement de phosphorescence peuvent être utilisées. Le rendement de lecture peut alors être doublé de cette façon, puisque les photons de phosphorescence qui sont émis vers l'arrière de la plaque sont réfléchis en direction de l'unité de lecture.

Avantageusement pour ces premiers modes de réalisation, l'unité de lecture peut comprendre en outre un élément filtrant qui est disposé entre le système optique et le capteur d'image matriciel à décalage temporel et intégration, ou au niveau de la fenêtre d'entrée, et qui est adapté pour transmettre sélectivement le rayonnement de phosphorescence par rapport à la lumière de stimulation. De cette façon, l'image qui est saisie n'est pas perturbée par une quantité significative de la lumière de stimulation qui rentrerait dans l'unité de lecture en parvenant jusqu'au capteur d'image. De préférence, l'élément filtrant peut comprendre un matériau inorganique à base d'oxydes métalliques, tels que de l'aluminate de cobalt, aussi appelé bleu de cobalt, ou du stannate de cobalt, aussi appelé bleu de caeruleum. En effet, les pigments inorganiques de filtrage lumineux sont moins fluorescents que des pigments organiques, ces derniers nécessitant alors d'utiliser des filtres additionnels contre la lumière de fluorescence des filtres organiques eux-mêmes.

Dans des réalisations préférées d'un lecteur de plaques phosphorescentes selon l'invention, l'un au moins des perfectionnements suivants peut être utilisé seul ou en combinaison de plusieurs d'entre eux :
- le capteur d'image matriciel à décalage temporel et intégration peut être du type capteur d'image à transfert de charges, ou CCD, et préférentiellement du type capteur d'image à transfert de charges aminci et adapté pour recevoir le rayonnement de phosphorescence par une face arrière d'un substrat de ce capteur. La sensibilité du lecteur peut ainsi être encore améliorée ;
- un transfert de ligne qui est mis en oeuvre par le capteur d'image matriciel à décalage temporel et intégration lors du fonctionnement du lecteur de plaques phosphorescentes, peut être cadencé à partir d'une horloge qui contrôle simultanément les moyens d'entraînement, pour fixer une vitesse d'entraînement de la plaque en cours de lecture devant les moyens de stimulation et la fenêtre d'entrée de l'unité de lecture. Ainsi, la vitesse de transfert de ligne du capteur d'image peut être corrélée avec précision avec la vitesse d'entraînement de la plaque phosphorescente ;
- le système optique de l'unité de lecture peut posséder une ouverture numérique qui est supérieure à 0,70, de préférence supérieure à 0,90, au niveau de la fenêtre d'entrée de l'unité de lecture. L'efficacité de collecte du rayonnement de phosphorescence peut ainsi être améliorée, et donc aussi le rendement de lecture ;
- le système optique de l'unité de lecture comprend une galette de fibres optiques qui peut posséder une dimension transversale qui est supérieure ou égale à une longueur de la bande transversale de la plaque en cours de lecture, cette dimension transversale de la galette de fibres optiques et la longueur de la bande transversale de la plaque étant mesurées perpendiculairement à la direction d'entraînement en translation de la plaque en cours de lecture. En outre, la galette de fibres optiques peut posséder une dimension longitudinale qui est inférieure ou égale à une longueur de colonnes du capteur d'image matriciel à décalage temporel et intégration, cette dimension longitudinale de la galette de fibres optiques et la longueur de colonnes étant mesurées parallèlement à la direction d'entraînement en translation de la plaque en cours de lecture. Dans ce cas, et lorsque l'énergie de stimulation est apportée sous forme lumineuse, les fibres optiques de la galette de fibres optiques peuvent être au moins partiellement constituées d'un matériau adapté pour transmettre sélectivement le rayonnement de phosphorescence tout en absorbant une partie de la lumière de stimulation qui a traversé la fenêtre d'entrée de l'unité de lecture ;
- les moyens de stimulation et l'unité de lecture peuvent être adaptés pour que la bande transversale de la plaque en cours de lecture, dont l'image est formée par le rayonnement de phosphorescence et saisie lors d'un seul passage de la plaque dans le lecteur, possède une extension transversale qui est supérieure à 20 mm, de préférence supérieure à 28 mm, perpendiculairement à la direction d'entraînement en translation de la plaque ; et
- l'unité de lecture peut comprendre plusieurs capteurs d'image qui sont disposés parallèlement entre eux et décalés transversalement par rapport à la direction d'entraînement de la plaque phosphorescente, de façon à augmenter une longueur totale de segments de bandes transversales dans la plaque en cours de lecture, dont les images sont formées par le rayonnement de phosphorescence et saisies lors d'un seul passage de la plaque dans le lecteur.

Un deuxième aspect de l'invention propose un ensemble de lecture de plaques phosphorescentes, qui comprend :
- un lecteur de plaques phosphorescentes qui est conforme au premier aspect de l'invention ; et
- au moins une plaque phosphorescente adaptée pour être introduite dans le lecteur, cette plaque comprenant une couche d'un matériau phosphorescent apte à produire un rayonnement de phosphorescence en réponse à une lumière de stimulation qui éclaire le matériau phosphorescent, le rayonnement de phosphorescence et la lumière de stimulation ayant des longueurs d'onde différentes, ou en réponse à un chauffage du matériau phosphorescent, dans des portions de la plaque qui ont été préalablement exposées à un rayonnement d'enregistrement d'image, la plaque phosphorescente comprenant en outre une couche d'un matériau apte à réfléchir le rayonnement de phosphorescence, qui est disposée parallèlement à la couche du matériau phosphorescent et de façon à être située à l'opposé de l'unité de lecture lorsque la plaque est introduite dans le lecteur.

Un troisième aspect de l'invention propose un procédé de lecture d'une plaque phosphorescente, qui comprend d'utiliser un ensemble de lecture de plaque phosphorescente conforme au deuxième aspect de l'invention, pour lire une image préalablement enregistrée dans la plaque lors d'un premier passage de cette plaque dans le lecteur, afin de saisir une image brute de la plaque qui est formée par le rayonnement de phosphorescence. Le procédé de l'invention comprend en outre l'une au moins des deux étapes correctrices suivantes :
/i/ un traitement de suppression des défauts d'appareil, comprenant d'utiliser à nouveau le lecteur avec la même plaque lors d'un autre passage de cette plaque dans le lecteur qui est effectuée après le premier passage, afin de saisir une image de fond de la plaque, puis de soustraire l'image de fond à l'image brute ; et
/ii/ un traitement de correction locale, comprenant de multiplier ou de diviser des intensités qui ont été saisies par l'unité de lecture lors du premier passage de la plaque dans le lecteur, pour certains au moins des points de l'image de la plaque, par une fonction de réponse qui possède des valeurs différentes pour plusieurs de ces points de l'image.

D'autres particularités et avantages de la présente invention apparaîtront dans la description ci-après d'exemples de réalisation non limitatifs, en référence aux dessins annexés, dans lesquels :
- les figures 1a et 1b sont une vue en perspective par le dessous et une vue transversale, respectivement, d'un lecteur de plaques phosphorescentes conforme à l'invention ;
- la figure 2 illustre un mode de contrôle d'un lecteur de plaques phosphorescentes conforme à l'invention ;
- la figure 3 est une section d'une unité de lecture pour un lecteur de plaques phosphorescentes, conformément à un mode de réalisation préféré de l'invention ;
- la figure 4 est une section d'une plaque phosphorescente en cours de lecture dans un lecteur conforme aux figures 1a et 1b ;
- la figure 5 illustre une disposition possible de plusieurs capteurs d'images dans un lecteur de plaques phosphorescentes conforme à l'invention ; et
- la figure 6 est une vue en section d'un lecteur de plaques phosphorescentes qui n'est pas l'objet de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

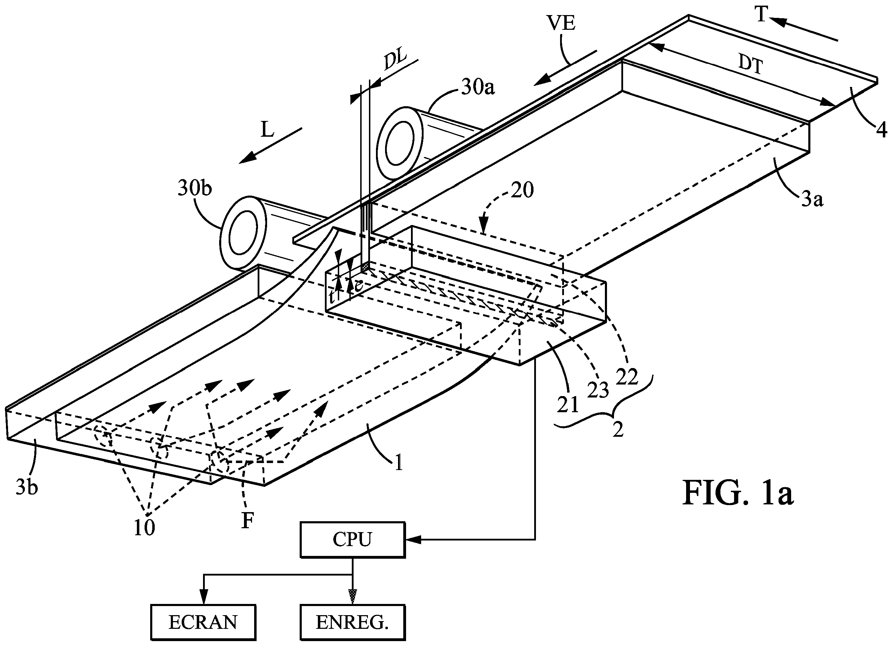

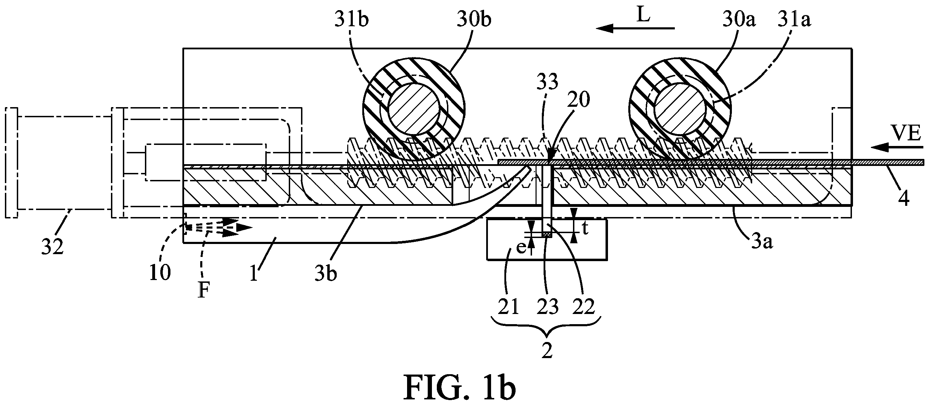

Les références qui sont indiquées sur les figures 1a et 1b ont les significations suivantes :
- 1: guide de lumière
- 10: sources de lumière de stimulation
- 2: unité de lecture
- 20: fenêtre d'entrée de l'unité de lecture
- 21: capteur d'image
- 22: système optique
- 23: élément filtrant
- 3a, 3b: segments de support glissant, ou sole
- 30a, 30b: rouleaux d'entraînement
- 31a, 31b: pignons solidaires des rouleaux d'entraînement
- 32: moteur pas-à-pas
- 33: arbre en forme de vis sans fin
- 4: plaque phosphorescente
- VE: vitesse d'entraînement en translation de la plaque phosphorescente en cours de lecture
- L: direction longitudinale du lecteur de plaque phosphorescente, parallèle à la vitesse d'entraînement VE et orientée de l'amont vers l'aval par rapport au sens de la vitesse d'entraînement VE
- T: direction transversale du lecteur de plaque phosphorescente, perpendiculaire à la direction longitudinale L
- DT: longueur transversale de la plaque phosphorescente
- DL: longueur de colonnes du capteur d'image

Les segments de support glissant 3a et 3b sont coplanaires et constitués en surface d'un matériau à faible coefficient de friction, tel que du polytétrafluoroéthylène (PTFE). Ils sont limités latéralement par deux parois (non représentées sur la figure 1a) pour guider un glissement de la plaque phosphorescente 4 sur les segments 3a et 3b, parallèlement à la direction longitudinale L. La plaque 4 est entraînée dans la direction longitudinale L par les rouleaux 30a et 30b, eux-mêmes mis en rotation par le moteur pas-à-pas 32 (figure 1b), et par l'intermédiaire de l'arbre 33 et des pignons 31a et 31b. Pour entraîner la plaque 4 précisément à la vitesse VE commandée par le moteur 32, les rouleaux 30a et 30b peuvent être recouverts d'un matériau non-glissant tel que du polyuréthane (PU) pour éviter des glissements entre ces rouleaux et la plaque 4. Les segments de support glissant 3a et 3b, les rouleaux d'entraînement 30a et 30b, les pignons 31a et 31b, le moteur 32 et l'arbre 33 constituent un mécanisme d'entraînement de la plaque 4. D'autres réalisations équivalentes du mécanisme d'entraînement peuvent être mises en oeuvre alternativement.

Les deux segments de support glissant 3a et 3b présentent un espace intermédiaire à travers lequel la lumière de stimulation est dirigée sur la plaque 4, et le rayonnement de phosphorescence qui est produit par la plaque 4 est collecté par l'unité de lecture 2.

Le guide de lumière 1 peut être constitué d'un matériau transparent tel que du polycarbonate, et est adapté pour guider par réflexion totale interne le flux de lumière de stimulation F qui est produit par les sources 10. Dans des réalisations de l'invention, les sources 10 peuvent être des diodes électroluminescentes, et la lumière de stimulation F peut être rouge. Il est avantageux de filtrer les sources 10 en amont du guide de lumière 1 pour garantir la pureté spectrale de cette source, et ainsi optimiser l'efficacité de l'élément filtrant 23 qui est décrit plus loin. Le guide 1 possède une forme qui est adaptée pour diriger la lumière de stimulation F sur la plaque phosphorescente 4 sous forme d'un faisceau qui possède une extension transversale supérieure ou égale à la longueur transversale DT de la plaque. En outre, ce faisceau de la lumière de stimulation F est incliné par rapport à une direction perpendiculaire aux segments de support glissant 3a et 3b, de sorte que la direction d'émergence de la lumière de stimulation F, à la sortie du guide 1 en direction de la plaque 4, soit orientée obliquement vers l'amont du mouvement de la plaque 4 dans le lecteur. Autrement dit, le faisceau de la lumière de stimulation F possède une composante de son vecteur de propagation qui est dans le sens opposé à celui de la vitesse d'entraînement VE de la plaque 4, lorsque la lumière de stimulation F parvient à la surface de la plaque 4.

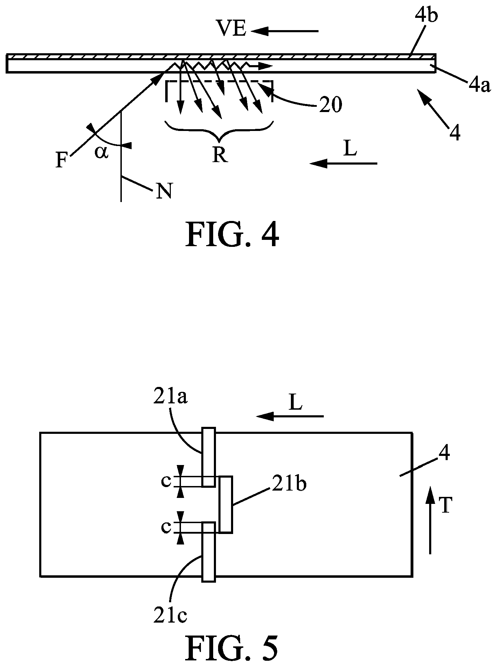

La fenêtre d'entrée 20, le capteur d'image 21, le système optique 22 et l'élément filtrant 23 appartiennent à l'unité de lecture 2. L'unité de lecture 2 détecte le rayonnement de phosphorescence qui est produit par la plaque 4 lorsqu'elle reçoit la lumière d'excitation F après que des parties au moins de cette plaque 4 ont été préalablement exposées à un rayonnement d'enregistrement, par exemple un rayonnement X. Selon une caractéristique de l'invention pour ce type de modes de réalisation du lecteur, un même endroit de la plaque phosphorescente 4 passe d'abord devant la fenêtre d'entrée 20 de l'unité de lecture 2, puis devant la sortie du guide de lumière 1 par où émerge la lumière de stimulation F. Autrement dit, les moyens de stimulation lumineuse sont disposés en aval de l'unité de lecture 2 par rapport au sens d'entraînement de la plaque 4 qui est en cours de lecture, indiqué sur les figures par la flèche de la vitesse d'entraînement VE. Mais comme cela sera décrit plus loin en relation avec la figure 4, la plaque 4 est conçue de façon que la lumière de stimulation F diffuse dans le matériau phosphorescent de celle-ci en sens contraire du déplacement de la plaque 4 dans le lecteur, jusque devant la fenêtre d'entrée 20, de préférence sans dépasser la limite amont de celle-ci par rapport au sens de la vitesse VE. Ainsi, le rayonnement de phosphorescence est produit par la plaque 4 au niveau de la fenêtre 20 et peut être collecté par l'unité de lecture 2 à travers cette fenêtre 20.

Le système optique 22 conjugue optiquement la bande transversale de la plaque 4 qui se trouve devant la fenêtre d'entrée 20 à un instant du déplacement de la plaque 4 en cours de lecture, avec la surface photosensible du capteur d'image 21. Selon les modes de réalisation du lecteur, la fenêtre d'entrée 20 peut être matérielle, ou bien seulement désigner l'endroit d'entrée du rayonnement de phosphorescence dans le système optique 22 de l'unité de lecture 2. Le système optique 22 peut avoir un grossissement quelconque, en fonction de sa constitution.

Toutefois, pour augmenter le rendement de collecte du rayonnement de phosphorescence, le système optique 22 possède avantageusement une ouverture numérique qui est importante : supérieure à 0,70 et de préférence supérieure à 0,90. Pour cela, le système optique 22 comporte à partir de la fenêtre d'entrée 20 pour le rayonnement de phosphorescence une galette de fibres optiques dont l'axe optique est perpendiculaire à la plaque 4 en cours de lecture. Un tel composant optique est bien connu de l'Homme du métier. Il est constitué par des segments de fibres optiques qui sont assemblés parallèlement les uns aux autres entre deux faces planes du composant. Une telle galette de fibres optiques peut être utilisée seule pour former le système optique 22, ou en combinaison avec d'autres composants imageurs. De façon préférentielle pour l'invention, on utilise une galette de fibres optiques qui possède un grossissement d'image égal à l'unité. Afin de saisir l'image de la plaque 4 sur toute une bande transversale de celle-ci lors d'un seul passage de lecture, la galette de fibres optiques possède de préférence une dimension transversale, selon la direction T, qui est supérieure ou égale à la longueur DT de la bande transversale de la plaque 4.

Pour les plaques phosphorescentes qui ont été utilisées avec le lecteur de l'invention, le rayonnement de phosphorescence est de la lumière visible de couleur bleue. Pour ne pas saturer le capteur d'image 21 et augmenter un contraste de l'image de lecture de chaque plaque, il est préférable de filtrer efficacement le rayonnement qui traverse la fenêtre d'entrée 20 pour supprimer une partie importante de la lumière de stimulation, de couleur rouge, qui traverse la fenêtre d'entrée 20 en même temps que le rayonnement de phosphorescence. Pour cela, une couche d'un matériau de filtrage optique peut être disposée au niveau de la fenêtre d'entrée 20, ou à un autre niveau du système optique 22, ou juste devant la surface photosensible du capteur d'image 21. Possiblement, des composés organiques peuvent être utilisés comme matériau de filtrage, pour absorber la lumière de stimulation en étant aussi transparents que possible pour le rayonnement de phosphorescence. Mais de tels composés organiques sont en général eux-mêmes fluorescents, de sorte qu'il est nécessaire de prévoir un filtre supplémentaire pour supprimer le rayonnement de fluorescence des composés organiques. Pour cette raison, les inventeurs préconisent l'utilisation de composés inorganiques, c'est-à-dire minéraux, pour constituer l'élément filtrant 23, car de tels composés minéraux peuvent être dépourvus de fluorescence. Notamment, de l'aluminate de cobalt (CoAl₂O₄), aussi appelé bleu de cobalt, ou du stannate de cobalt (CoSnO₃), aussi appelé bleu de caeruleum, peut être utilisé dans ce but, en couche de 10 µm à 20 µm d'épaisseur, par exemple, pour former l'élément filtrant 23.

Alternativement, ou en combinaison avec la mise en oeuvre d'un élément filtrant spécifique tel qu'il vient d'être décrit, il est possible d'utiliser un matériau optique pour certains au moins des composants du système optique 22, qui soit transparent pour le rayonnement de phosphorescence et absorbant pour la lumière de stimulation F. Le matériau transparent qui constitue le coeur des fibres optiques de la galette de fibres optiques peut être choisi pour transmettre sélectivement le rayonnement de phosphorescence (lumière bleue dans l'exemple donné) en absorbant la lumière de stimulation F (lumière rouge dans l'exemple) avec une efficacité élevée. Le verre bleu qui est désigné par BG39 et celui qui est désigné par BG3 et qui sont produits par Schott conviennent pour la réalisation de fibres optiques filtrantes.

Le capteur d'image 21 est du type capteur matriciel à décalage temporel et intégration, ou TDI. Un tel capteur est bien connu de l'Homme du métier. La surface photosensible d'un capteur TDI est constituée d'éléments photosensibles qui sont répartis en lignes et en colonnes, et des signaux d'accumulation respectifs des éléments photosensibles sont transférés d'une ligne à la suivante, parallèlement à la direction des colonnes. La dernière ligne forme le registre de sortie, par lequel chaque ligne de points d'image est lue. Par principe d'un tel capteur, une image est saisie au fur et à mesure que l'image est décalée sur la surface photosensible du capteur parallèlement aux colonnes, avec le décalage de l'image qui est simultané au transfert de ligne du capteur. Ainsi, la plaque 4 qui est en cours de lecture peut être saisie en image pendant tout le déplacement d'une bande transversale de cette plaque devant la fenêtre d'entrée 20 de l'unité de lecture 2. De façon générale, il est nécessaire que la vitesse d'entraînement VE de la plaque 4 soit égale au produit de la vitesse de transfert de ligne du capteur d'image TDI par le grossissement du système optique 22. En ce sens, la vitesse de transfert de ligne du capteur d'image TDI est parallèle et dite corrélée avec la vitesse VE de l'entraînement de la plaque 4 par le mécanisme d'entraînement. Bien sûr, si le grossissement du système optique 22 est négatif, la vitesse de transfert de ligne et la vitesse d'entraînement VE sont orientées dans des sens opposés. Enfin, lorsque le seul composant imageur du système optique 22 est la galette de fibres optiques de grossissement égal à l'unité, la vitesse de transfert de ligne du capteur TDI doit être égale à la vitesse d'entraînement VE de la plaque 4, et dans le même sens que celle-ci.

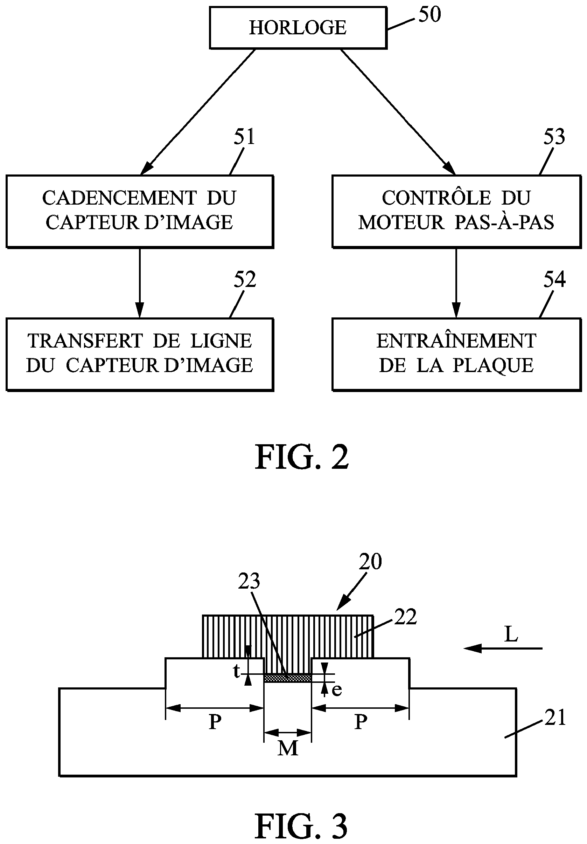

La figure 2 est un schéma-bloc qui illustre un exemple d'architecture de contrôle en boucle ouverte, permettant de garantir une telle corrélation entre la vitesse de transfert de ligne du capteur TDI 21 et la vitesse d'entraînement VE de la plaque 4. Une horloge commune 50 cadence en parallèle le fonctionnement du capteur TDI 21 (boîte 51) et le moteur pas-à-pas 32 (boîte 53). Eventuellement, des diviseurs de fréquence peuvent être insérés entre l'horloge 50 et le contrôle du capteur TDI 21 d'une part, et entre l'horloge 50 et le contrôle du moteur pas-à-pas 32 d'autre part. La vitesse de transfert de ligne du capteur TDI 21 (boîte 52) résulte alors du cadencement du fonctionnement de ce capteur (boîte 51). Simultanément, la vitesse d'entraînement VE de la plaque 4 (boîte 54) résulte du contrôle du moteur 32 (boîte 53), de l'angle de pas élémentaire de ce moteur et du rapport de transmission qui est produit par l'arbre 33, les pignons 31a, 31b et le diamètre des rouleaux 30a, 30b. L'Homme du métier sait alors programmer l'horloge 50 et des diviseurs de fréquence nécessaires, notamment en utilisant un circuit logique programmable du type FGPA, pour obtenir la corrélation nécessaire entre la vitesse d'entraînement VE et la vitesse de transfert de ligne du capteur TDI. Par exemple, lorsque le pas des photodétecteurs dans la surface photosensible du capteur TDI 21 est égal à 14 µm (micromètre), et que le grossissement du système optique 22 est égal à l'unité, la plaque 4 peut être avancée successivement deux fois de 7 µm à chaque cycle de transfert de ligne du capteur TDI 21. Alors la tolérance sur l'écrasement de la surface en polyuréthane de chaque rouleau d'entraînement 30a, 30b contre la plaque 4, et la tolérance sur l'épaisseur de la plaque 4 elle-même, est sélectionnée en dessous de 50 µm pour assurer une erreur qui est inférieure à la moitié des pas des photodétecteurs, entre l'image qui est saisie par le capteur TDI 21 et l'image qui est enregistrée dans la plaque 4. Un patin en élastomère peut avantageusement être disposé au dessus de la plaque 4, au niveau de la fenêtre d'entrée 20, pour assurer que la plaque 4 soit bien plaquée sur le système optique 22 et garantir ainsi une haute résolution.

Evidemment, d'autres méthodes peuvent être utilisées alternativement pour obtenir la corrélation entre la vitesse d'entraînement VE et la vitesse de transfert de ligne du capteur TDI. En particulier, des repères ou des éléments de la plaque 4 peuvent être détectés dans une image qui est saisie de cette plaque, et la vitesse d'entraînement VE qui est générée par le moteur 32 peut être asservie en boucle fermée à la vitesse de transfert de ligne du capteur TDI 21.

Pour exploiter au maximum le champ d'image de la galette de fibres optiques, une dimension longitudinale de celle-ci, notée DL et mesurée parallèlement à la direction L, est avantageusement inférieure ou égale à une longueur des colonnes du capteur TDI, lorsque le système optique 22 possède un grossissement qui est égal à l'unité.

Le capteur TDI 21 peut être du type CCD. Préférentiellement, il peut être du type capteur CCD aminci par la face arrière et destiné à recevoir le rayonnement à détecter à travers cette face arrière («back-thinned CCD» en anglais) pour avoir une sensibilité lumineuse qui est supérieure. De tels capteurs d'image sont disponibles commercialement et bien connus de l'Homme du métier.

La figure 3 montre un agencement préférentiel de la galette de fibres optiques qui est utilisée pour constituer le système optique 22, sur un tel capteur CCD aminci par la face arrière et destiné à recevoir le rayonnement à détecter à travers cette face arrière. Dans la section transversale de la figure 3, la lettre M désigne la zone d'amincissement du capteur d'image 21, et les lettres P désignent deux zones latérales dans lesquelles le capteur 21 n'a pas été aminci. La galette de fibres optiques peut être usinée en retrait sur ses deux côtés, de sorte qu'une partie centrale de la galette de fibres optiques pénètre jusqu'au niveau de la zone amincie M du capteur, entre les deux zones non-amincies P. Ainsi, il est possible d'obtenir une perte de résolution qui est très faible en sortie des fibres optiques devant la surface photosensible du capteur d'image. La galette de fibres optiques peut alors être maintenue en position sur le capteur d'image 21 par collage, avec une colle opaque qui est disposée dans les zones non-amincies P. En outre, l'élément filtrant 23 peut être disposé sur la zone amincie M du capteur d'image 21, entre celui-ci et la galette de fibres optiques. t désigne la profondeur de pénétration de la partie centrale de la galette de fibres optiques entre les deux zones non-amincies P du capteur d'image 21, et e désigné l'épaisseur de l'élément filtrant 23. Par exemple, t peut être égale à 280 µm (micromètre) environ, et e peut être égale à 20 µm.

L'image qui est saisie par le capteur d'image 21 peut être transmise à un processeur de traitement noté CPU sur la figure 1a, puis enregistrée ou affichée sur un écran de visualisation.

Conformément à la figure 4 sur laquelle est reportée la vitesse d'entraînement VE pour une plaque phosphorescente 4 en cours de lecture, la plaque 4 comporte une couche 4a du matériau phosphorescent, par exemple à base de bromure de césium (CsBr), et une couche 4b d'un matériau réfléchissant, tel que de l'aluminium (Al). La couche 4a est sur la couche 4b, de préférence sans épaisseur intermédiaire. La figure 4 montre le faisceau de lumière d'excitation F qui est incliné par rapport à la direction perpendiculaire à la plaque 4a, notée N, de sorte que le vecteur de propagation du faisceau F possède une composante antiparallèle au vecteur de la vitesse d'entraînement VE. Autrement dit, l'angle d'inclinaison a tel que représenté est compris entre 0° et 90°. Grâce à cet angle d'inclinaison, la lumière d'excitation diffuse à l'intérieur de la couche 4a sur une distance qui est plus longue en direction de l'amont du déplacement de la plaque 4. Pendant cette diffusion, elle provoque l'émission du rayonnement de phosphorescence R par la couche 4a, proportionnellement à la quantité de rayonnement d'enregistrement d'image qui a été reçue en chaque point de la plaque 4 lors de la phase d'exposition. Le rayonnement de phosphorescence R est émis vers la couche réfléchissante 4b et à travers la surface libre de la couche 4a, c'est-à-dire en direction de l'unité de lecture 2. La couche réfléchissante 4b redirige alors la partie du rayonnement qui a été émise vers elle en direction de l'unité de lecture 2, produisant ainsi un gain d'un facteur qui est compris entre 1,5 et 2,0 sur le rendement de lecture. L'utilisation de plaques phosphorescentes du type «Needle Imaging Plate», ou NIP, améliore la résolution spatiale de l'image qui est enregistrée dans une telle plaque lors de l'exposition au rayonnement d'enregistrement, et améliore la restitution de cette résolution lors de la lecture en utilisant un lecteur qui est conforme à la présente invention. Dans de telles plaques NIP, le matériau phosphorescent est disposé sous forme d'aiguilles qui sont orientées dans la couche 4a. Ce type de plaques phosphorescentes NIP augmente aussi par elles-mêmes le rendement de lecture.

La figure 5 montre une amélioration d'un lecteur conforme à l'invention, pour utiliser des plaques phosphorescentes dont la dimension transversale est supérieure. Plusieurs capteurs d'images identiques, par exemple trois capteurs 21a-21c, peuvent être disposés transversalement de sorte que la réunion des segments d'image qui sont saisis respectivement par ces capteurs permette de reconstituer l'image complète de la plaque 4. De préférence, ces capteurs peuvent présenter des chevauchements c selon la direction transversale T, pour faciliter la reconstruction de l'image complète. Pour une telle structure de lecteur à plusieurs capteurs d'images, chacun des capteurs est associé avec un système optique qui lui est dédié, et des moyens de stimulation dédiés, chaque fois de la façon qui a été décrite précédemment pour un lecteur à un seul capteur d'image.

Compte tenu de tous les perfectionnements qui ont été décrits pour un lecteur de plaques phosphorescentes conforme à l'invention, avec les moyens de stimulation par lumière rouge, les inventeurs ont obtenu un rendement de lecture de l'ordre de 47% à 51%, ce rendement étant défini comme le nombre de photons de phosphorescence qui sont détectés par rapport au nombre d'électrons qui ont été excités dans le matériau phosphorescent lors de l'étape d'enregistrement et qui sont restés dans cet état jusqu'à l'introduction de la plaque dans le lecteur. Simultanément, une résolution spatiale qui est comprise entre 15 Lp/mm (Lp/mm signifiant paire de lignes par millimètre) et 20 Lp/mm peut être obtenue.

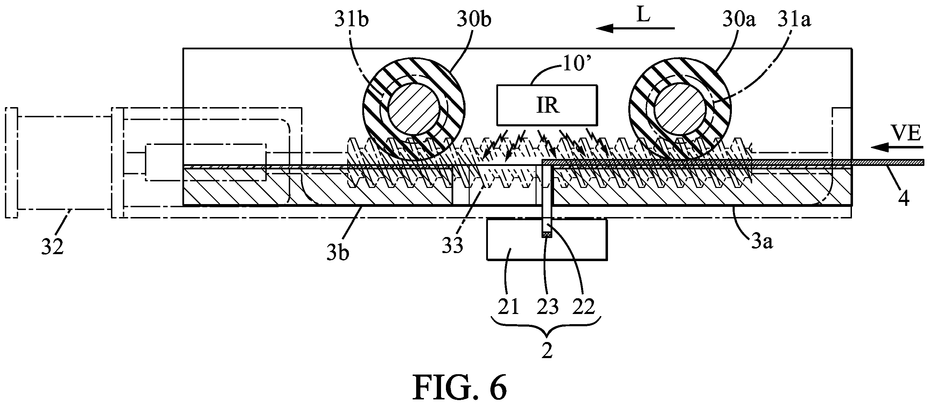

La figure 6 illustre un lecteur selon une variante qui n'est pas l'objet une alternative de réalisation de l'invention, dans laquelle les moyens de stimulation sont de nature source de chaleur au lieu de source de lumière. Autrement dit, la lecture de la plaque est basée sur la thermoluminescence. La référence 10' désigne ainsi une source de chaleur, par exemple une source de rayonnement infrarouge (IR) qui est disposée préférablement du côté de la plaque phosphorescente 4 en cours de lecture qui est opposé à l'unité de lecture 2. Cette source de chaleur 10' s'étend sur toute la largeur des segments de support glissant 3a et 3b, selon la direction transversale T. Elle est disposée à l'aplomb de l'intervalle intermédiaire entre les deux segments 3a et 3b, mais peut être décalée vers l'amont ou l'aval du déplacement de la plaque 4, par rapport à la fenêtre d'entrée 20 de l'unité de lecture 2, en fonction des caractéristiques de diffusion de la chaleur dans cette plaque selon la direction longitudinale L. Eventuellement, la plaque 4 peut être adaptée pour obtenir de telles caractéristiques de diffusion de la chaleur qui augmentent le rendement de lecture. En particulier, la couche 4b peut être optimisée dans ce but, notamment par le choix du matériau réfléchissant, l'épaisseur de la couche 4b, et une texturation éventuelle de celle-ci.

Pour améliorer le contraste et la fidélité de la lecture d'une image enregistrée dans une plaque phosphorescente, en utilisant un lecteur conforme à l'invention, le procédé de lecture peut comprendre deux étapes correctrices, en plus de l'étape de lecture. L'image qui est enregistrée dans la plaque phosphorescente est d'abord lue de la façon qui a été décrite plus haut, lors d'un premier passage de la plaque dans le lecteur. L'image brute qui est ainsi saisie est mémorisée. A l'issue de ce premier passage de lecture, l'image qui était enregistrée dans la plaque phosphorescente a été effacée, puisque tous les électrons excités qui constituaient l'image enregistrée sont revenus dans leur état fondamental sous l'effet de la lumière de stimulation ou de la chaleur de stimulation.

Une première étape correctrice est réalisée en repassant la même plaque phosphorescente dans le lecteur, et en enregistrant une seconde image, dite image de fond. Cette image de fond représente des défauts de lecture qui sont dus à la plaque utilisée et/ou au lecteur. Ils comprennent notamment l'effet d'une quantité de lumière d'excitation qui parviendrait néanmoins jusqu'au capteur d'image à travers l'élément filtrant et le système optique. Cette image de fond est alors soustraite à l'image brute de façon logicielle. Autrement dit, l'intensité de l'image de fond en un point d'image est soustraite à l'intensité de l'image brute au même point. Eventuellement, les intensités de l'image de fond peuvent être remplacées par celles d'une lecture TDI qui est réalisée en maintenant la plaque phosphorescente immobile sous la fenêtre d'entrée de l'unité de lecture. Des valeurs moyennes de l'image de fond peuvent ainsi être obtenues, par rapport à la direction longitudinale L, qui rendent compte des quantités résiduelles de la lumière de stimulation qui parviennent au capteur d'image. Cette étape relâche l'exigence sur l'efficacité de suppression de la lumière de stimulation par l'élément filtrant 43.

La seconde étape correctrice consiste à exposer encore la même plaque à un rayonnement d'enregistrement qui est supposé uniforme, puis à recommencer une opération de lecture. La nouvelle image qui est saisie représente alors des défauts d'uniformité de réponse des différents composants de l'unité de lecture 2 et de la plaque 4 au rayonnement de phosphorescence. Elle est utilisée pour déterminer une fonction de réponse locale du système de lecture. Cette fonction de réponse permet alors d'appliquer un traitement de correction locale à l'image brute, en multipliant ou divisant l'intensité de l'image brute en chaque point d'image par la fonction de réponse en ce point. L'Homme du métier sait sélectionner entre l'opération de multiplication et celle de division en fonction de la définition qu'il utilise pour la fonction de réponse.

Préférablement, la première étape correctrice peut être effectuée avant la seconde étape correctrice, de sorte que la seconde soit appliquée à l'image brute à laquelle a déjà été soustraite l'image de fond.

Il est entendu que l'invention peut être reproduite en adaptant ou modifiant des aspects secondaires de celle-ci qui ont été décrits à titre d'illustration, tout en conservant certains au moins des avantages cités. Pour rappel, l'invention fournit un lecteur pour radiographie numérique qui présente les avantages suivants :
- ce lecteur produit un rendement de lecture, ou sensibilité, qui est élevé ;
- l'opération de lecture est rapide ;
- il produit une résolution spatiale qui est fine ;
- le coût de fabrication du lecteur est réduit ; et
- l'encombrement du lecteur est limité.

## Revendications

1. Lecteur de plaques phosphorescentes comprenant :
- des moyens de stimulation (1, 10) pour amener un flux d'énergie de stimulation sur toute une bande transversale d'une plaque phosphorescente (4) en cours de lecture ;
- au moins une unité de lecture (2), comprenant une fenêtre d'entrée (20) pour collecter un rayonnement de phosphorescence qui est produit par des portions de la plaque phosphorescente en réponse au flux d'énergie de stimulation, et comprenant en outre au moins un capteur d'image (21) et un système optique (22) qui est disposé pour transférer le rayonnement de phosphorescence à partir de la fenêtre d'entrée au capteur d'image ; et
- un mécanisme d'entraînement, adapté pour guider et entraîner en translation la plaque (4) en cours de lecture de sorte que ladite plaque défile devant les moyens de stimulation (1, 10) et la fenêtre d'entrée (20) de l'unité de lecture (2),
de sorte que le capteur d'image (21) saisisse une image de toute la bande transversale de la plaque (4) en cours de lecture, formée par le rayonnement de phosphorescence, pendant que la plaque est entrainée en translation,
le capteur d'image (21) étant du type capteur matriciel à décalage temporel et intégration, et le lecteur est adapté pour que ledit capteur d'image matriciel à décalage temporel et intégration ait une vitesse de transfert de ligne qui est parallèle et corrélée avec une vitesse d'entraînement de la plaque (4) par le mécanisme d'entraînement,
les moyens de stimulation (1, 10) étant disposés en aval de la fenêtre d'entrée (20) de l'unité de lecture (2) par rapport à un sens de la translation de la plaque (4) en cours de lecture, pour amener le flux d'énergie de stimulation sur ladite plaque sous la forme d'un faisceau de lumière de stimulation qui est incident sur la plaque d'un même côté que l'unité de lecture, et qui diffuse simultanément dans toute la bande transversale de la plaque en cours de lecture jusqu'en amont de la fenêtre d'entrée de l'unité de lecture par rapport au sens de la translation de la plaque, le système optique (22) comportant, à partir de la fenêtre d'entrée (20) pour le rayonnement de phosphorescence, une galette de fibres optiques dont l'axe optique est perpendiculaire à la plaque (4) en cours de lecture.

2. Lecteur selon la revendication 1, dans lequel les moyens de stimulation (1, 10) sont adaptés pour amener le faisceau de lumière de stimulation sur la plaque (4) en cours de lecture avec un vecteur de propagation dudit faisceau qui est oblique en direction de la fenêtre d'entrée (20) de l'unité de lecture (2), par rapport à une direction perpendiculaire à ladite plaque.

3. Lecteur selon la revendication 1 ou 2, dans lequel l'unité de lecture (2) comprend en outre un élément filtrant (23) qui est disposé entre le système optique (22) et le capteur d'image (21) matriciel à décalage temporel et intégration, ou au niveau de la fenêtre d'entrée (20), et qui est adapté pour transmettre sélectivement le rayonnement de phosphorescence par rapport à la lumière de stimulation.

4. Lecteur selon la revendication 3, dans lequel l'élément filtrant (23) comprend un matériau inorganique à base d'oxydes métalliques, tels que de l'aluminate de cobalt ou du stannate de cobalt.

5. Lecteur selon l'une quelconque des revendications précédentes, dans lequel le capteur d'image (21) matriciel à décalage temporel et intégration est de type capteur d'image à transfert de charges, préférentiellement de type capteur d'image à transfert de charges aminci et adapté pour recevoir le rayonnement de phosphorescence par une face arrière d'un substrat dudit capteur.

6. Lecteur selon l'une quelconque des revendications précédentes, dans lequel la galette de fibres optiques a une dimension transversale qui est supérieure ou égale à une longueur de la bande transversale de la plaque (4) en cours de lecture, ladite dimension transversale de la galette de fibres optiques et la longueur de la bande transversale de la plaque étant mesurées perpendiculairement à une direction d'entraînement en translation de la plaque en cours de lecture,
et la galette de fibres optiques a une dimension longitudinale qui est inférieure ou égale à une longueur de colonnes du capteur d'image (21) matriciel à décalage temporel et intégration, ladite dimension longitudinale de la galette de fibres optiques et ladite longueur de colonnes étant mesurées parallèlement à la direction d'entraînement en translation de la plaque (4) en cours de lecture.

7. Lecteur selon les revendications 6, dans lequel les fibres optiques de la galette de fibres optiques sont au moins partiellement constituées d'un matériau adapté pour transmettre sélectivement le rayonnement de phosphorescence tout en absorbant une partie de la lumière de stimulation qui a traversé la fenêtre d'entrée (20) de l'unité de lecture (2).

8. Lecteur selon l'une quelconque des revendications précédentes, dans lequel les moyens de stimulation (1, 10 ; 10') et l'unité de lecture (2) sont adaptés pour que la bande transversale de la plaque (4) en cours de lecture, dont l'image est formée par le rayonnement de phosphorescence et saisie lors d'un seul passage de la plaque dans le lecteur, possède une extension transversale qui est supérieure à 20 mm, de préférence supérieure à 28 mm, perpendiculairement à une direction d'entraînement en translation de ladite plaque.

9. Ensemble de lecture de plaques phosphorescentes, comprenant :
- un lecteur de plaques phosphorescentes conforme à l'une quelconque des revendications précédentes ; et
- au moins une plaque phosphorescente (4) adaptée pour être introduite dans ledit lecteur, ladite plaque comprenant une couche (4a) d'un matériau phosphorescent apte à produire un rayonnement de phosphorescence en réponse à une lumière de stimulation qui éclaire ledit matériau phosphorescent, le rayonnement de phosphorescence et la lumière de stimulation ayant des longueurs d'onde différentes, ou en réponse à un chauffage dudit matériau phosphorescent, dans des portions de la plaque (4) qui ont été préalablement exposées à un rayonnement d'enregistrement d'image, ladite plaque phosphorescente comprenant en outre une couche (4b) d'un matériau apte à réfléchir le rayonnement de phosphorescence, disposée parallèlement à la couche du matériau phosphorescent et de façon à être située à l'opposé de l'unité de lecture (2) lorsque la plaque (4) est introduite dans le lecteur.

10. Procédé de lecture d'une plaque phosphorescente (4), ledit procédé comprenant d'utiliser un ensemble de lecture de plaque phosphorescente conforme à la revendication 9, pour lire une image préalablement enregistrée dans la plaque lors d'un premier passage de ladite plaque dans ledit lecteur, afin de saisir une image brute de la plaque formée par le rayonnement de phosphorescence ;
et le procédé comprenant en outre l'une au moins des deux étapes correctrices suivantes :
/i/ un traitement de suppression de défauts d'appareil, comprenant d'utiliser à nouveau le lecteur avec la même plaque (4) lors d'un autre passage de ladite plaque dans ledit lecteur qui est effectuée après le premier passage, afin de saisir une image de fond, puis de soustraire ladite image de fond à l'image brute ; et
/ii/ un traitement de correction locale, comprenant de multiplier ou de diviser des intensités qui ont été saisies par l'unité de lecture (2) lors du premier passage de la plaque (4) dans le lecteur, pour des points de l'image de la plaque, par une fonction de réponse qui possède des valeurs différentes pour plusieurs desdits points de l'image.

## Patentansprüche

1. Phosphor-Plattenlesegerät, umfassend:
- Stimulationsmittel (1, 10) zum Zuführen eines stimulierenden Energieflusses zu einem gesamten Querband einer zu lesenden Leuchtstoffplatte (4);
- mindestens eine Ausleseeinheit (2) mit einem Eingangsfenster (20) zum Sammeln von Phosphoreszenzstrahlung, die von Teilen der phosphoreszierenden Platte als Reaktion auf den stimulierenden Energiefluss erzeugt wird, und ferner mit mindestens einem Bildsensor (21) und einem optischen System (22), das so angeordnet ist, dass es die Phosphoreszenzstrahlung von dem Eingangsfenster zu dem Bildsensor überträgt; und
- einen Antriebsmechanismus, der geeignet ist, die zu lesende Platte (4) zu führen und zu verschieben, so dass die Platte an den Stimulationsmitteln (1, 10) und dem Eingangsfenster (20) der Leseeinheit (2) vorbeigeführt wird,
wobei der Bildsensor (21) ein Bild des gesamten Querstreifens der zu lesenden Platte (4) aufnimmt, das durch die Phosphoreszenzstrahlung gebildet wird, während die Platte translatorisch bewegt wird,
der Bildsensor (21) vom Typ zeitverschiebender und integrierender Matrixbildsensor ist, und der Leser so angepasst ist, dass der zeitverschiebende und integrierende Matrixbildsensor eine Zeilenübertragungsrate hat, die parallel und korreliert mit einer Antriebsgeschwindigkeit der Platte (4) durch den Antriebsmechanismus ist,
die Stimulationsmittel (1, 10) stromabwärts des Eingangsfensters (20) der Leseeinheit (2) in Bezug auf eine Translationsrichtung der zu lesenden Platte (4) angeordnet sind, um den stimulierenden Energiestrom an die Platte in Form eines stimulierenden Lichtstrahls zu liefern, der auf die Platte von einer gleichen Seite wie die Leseeinheit einfällt, und die gleichzeitig über das gesamte Querband der zu lesenden Platte bis vor das Eintrittsfenster der Leseeinheit in Bezug auf die Verschiebungsrichtung der Platte streut, wobei das optische System (22) ausgehend vom Eintrittsfenster (20) für die phosphoreszierende Strahlung ein Bündel von Lichtleitfasern aufweist, deren optische Achse senkrecht zur zu lesenden Platte (4) verläuft.

2. Lesegerät nach Anspruch 1, **dadurch gekennzeichnet, dass** die Stimulationsmittel (1, 10) so beschaffen sind, dass sie den stimulierenden Lichtstrahl auf die zu lesende Platte (4) mit einem Ausbreitungsvektor des Strahls richten, der schräg zum Eintrittsfenster (20) der Leseeinheit (2) verläuft, bezogen auf eine Richtung senkrecht zur Platte.

3. Lesegerät nach Anspruch 1 oder 2, wobei die Leseeinheit (2) ferner ein Filterelement (23) umfasst, das zwischen dem optischen System (22) und dem Zeitverschiebungs-und Integrationsmatrix-Bildsensor (21) oder am Eingangsfenster (20) angeordnet ist und das so beschaffen ist, dass es selektiv Phosphoreszenzstrahlung in Bezug auf Anregungslicht durchlässt.

4. Das Lesegerät nach Anspruch 3, wobei das Filterelement (23) ein anorganisches Material auf der Basis von Metalloxiden wie etwa Kobaltaluminat oder Kobaltstannat umfasst.

5. Lesegerät nach einem der vorhergehenden Ansprüche, wobei der Bildsensor (21) mit integrierender Zeitverschiebungsmatrix vom Typ des ladungsgekoppelten Bildsensors ist, vorzugsweise vom Typ des verdünnten ladungsgekoppelten Bildsensors, und geeignet ist, phosphoreszierende Strahlung von einer Rückseite eines Substrats des Sensors zu empfangen.

6. Lesegerät nach einem der vorhergehenden Ansprüche, wobei der Lichtwellenleiter-Wafer eine Querabmessung hat, die größer oder gleich einer Länge des Querstreifens der zu lesenden Platte (4) ist, wobei die Querabmessung des Lichtwellenleiter-Wafers und die Länge des Querstreifens der Platte senkrecht zu einer Translationsrichtung der zu lesenden Platte gemessen werden,
und der Lichtwellenleiter-Wafer eine Längsabmessung hat, die kleiner oder gleich einer Spaltenlänge des Zeitverschiebungs- und Integrationsmatrix-Bildsensors (21) ist, wobei die Längsabmessung des Lichtwellenleiter-Wafers und die Spaltenlänge parallel zur Translationsantriebsrichtung der zu lesenden Platte (4) gemessen werden.

7. Lesegerät nach Anspruch 6, wobei die optischen Fasern des faseroptischen Wafers zumindest teilweise aus einem Material bestehen, das so beschaffen ist, dass es selektiv phosphoreszierende Strahlung durchlässt, während es einen Teil des Anregungslichts, das durch das Eingangsfenster (20) der Leseeinheit (2) gelangt ist, absorbiert.

8. Lesegerät nach einem der vorhergehenden Ansprüche, **dadurch gekennzeichnet, dass** die Anregungsmittel (1, 10; 10') und die Leseeinheit (2) so beschaffen sind, dass der Querstreifen der zu lesenden Platte (4), der durch die phosphoreszierende Strahlung abgebildet und bei einem einzigen Durchgang der Platte durch das Lesegerät erfasst wird, eine Querausdehnung von mehr als 20 mm, vorzugsweise mehr als 28 mm, senkrecht zu einer Translationsrichtung der Platte aufweist.

9. Phosphor-Plattenleser-Anordnung, umfassend:
- ein phosphoreszierendes Plattenlesegerät nach einem der vorhergehenden Ansprüche; und
- mindestens eine phosphoreszierende Platte (4), die in das Lesegerät eingesetzt werden kann, wobei die Platte eine Schicht (4a) aus einem phosphoreszierenden Material umfasst, das in der Lage ist, als Reaktion auf stimulierendes Licht, das das phosphoreszierende Material beleuchtet, eine phosphoreszierende Strahlung zu erzeugen, wobei die phosphoreszierende Strahlung und das stimulierende Licht unterschiedliche Wellenlängen haben, oder als Reaktion auf die Erwärmung des phosphoreszierenden Materials in Abschnitten der Platte (4), die zuvor einer bildaufzeichnenden Strahlung ausgesetzt waren, wobei die phosphoreszierende Platte ferner eine Schicht (4b) aus einem Material umfasst, das die phosphoreszierende Strahlung reflektieren kann, die parallel zu der Schicht aus phosphoreszierendem Material angeordnet ist und sich gegenüber der Ausleseeinheit (2) befindet, wenn die Platte (4) in das Lesegerät eingeführt wird.

10. Verfahren zum Lesen einer Phosphorplatte (4), wobei das Verfahren die Verwendung einer Phosphorplattenleseanordnung nach Anspruch 9 umfasst, um ein zuvor auf der Platte aufgezeichnetes Bild bei einem ersten Durchgang der Platte durch den Leser zu lesen, um ein Rohbild der Platte, das durch die Phosphorstrahlung gebildet wird, zu erfassen;
und das Verfahren umfasst außerdem mindestens einen der beiden folgenden Korrekturschritte:
/i/ ein Prozess zur Beseitigung von Kameradefekten, der die erneute Verwendung des Lesegeräts mit derselben Platte (4) bei einem weiteren Durchlauf der Platte durch das Lesegerät, der nach dem ersten Durchlauf durchgeführt wird, um ein Hintergrundbild aufzunehmen, und dann das Subtrahieren des Hintergrundbilds von dem Rohbild umfasst; und
/ii/ einen lokalen Korrekturprozess, der darin besteht, die Intensitäten, die von der Leseeinheit (2) beim ersten Durchgang der Platte (4) durch den Leser für Punkte auf dem Plattenbild aufgenommen wurden, mit einer Antwortfunktion zu multiplizieren oder zu dividieren, die für eine Vielzahl der genannten Punkte auf dem Bild unterschiedliche Werte aufweist.

## Claims

1. Phosphor plate reading apparatus, comprising:
- stimulating means (1, 10) for supplying a stimulating energy flux to an entire transverse band of a phosphor plate (4) to be read;
- at least one readout unit (2) having an input window (20) for collecting phosphorescent radiation generated by portions of the phosphorescent plate in response to the stimulating energy flux, and further having at least one image sensor (21) and an optical system (22) arranged such that it transmits the phosphorescent radiation from the input window to the image sensor; and
- a drive mechanism adapted to guide and displace the plate (4) to be read so that the plate is moved past the stimulating means (1, 10) and the input window (20) of the readout unit (2),
the image sensor (21) capturing an image of the entire transverse band of the plate (4) to be read, formed by the phosphorescence radiation, while the plate is moved translationally,
the image sensor (21) is of the time-shifting and integrating matrix image sensor type, and the reader is adapted so that the time-shifting and integrating matrix image sensor has a line transfer rate which is parallel and correlated with a driving speed of the disk (4) by the driving mechanism,
the stimulating means (1, 10) are arranged downstream of the input window (20) of the readout unit (2) with respect to a translational direction of the plate (4) to be read, for supplying the stimulating energy flux to the plate in the form of a stimulating light beam incident to the plate from a same side as the readout unit and which simultaneously scatters over the entire transverse band of the plate to be read as far as in front of the input window of the readout unit with respect to the direction of displacement of the plate, the optical system (22) comprising, starting from the input window (20) for the phosphorescent radiation, a bundle of optical fibers whose optical axis is perpendicular to the plate (4) to be read.

2. Reading apparatus according to claim 1, **characterized in that** the stimulating means (1, 10) are adapted to direct the stimulating light beam onto the plate (4) to be read with a propagation vector of the beam which is oblique to the input window (20) of the readout unit (2) with respect to a direction perpendicular to the plate.

3. Reading apparatus according to claim 1 or 2, wherein the readout unit (2) further comprises a filter element (23) arranged between the optical system (22) and the time shift and integration matrix image sensor (21) or at the input window (20) and adapted to selectively transmit phosphorescence radiation with respect to excitation light.

4. Reading apparatus according to claim 3, wherein the filter element (23) comprises an inorganic material based on metal oxides such as cobalt aluminate or cobalt stannate.

5. Reading apparatus according to any one of the preceding claims, wherein the integrating time shift matrix image sensor (21) is of the charge coupled image sensor type, preferably of the diluted charge coupled image sensor type, and is adapted to receive phosphorescent radiation from a back surface of a substrate of the sensor.

6. Reading apparatus according to any one of the preceding claims, wherein the optical fiber wafer has a transverse dimension greater than or equal to a length of the transverse band of the plate (4) to be read, wherein the transverse dimension of the optical fiber wafer and the length of the transverse band of the plate are measured perpendicular to a direction of translation of the plate to be read,
and the optical fiber wafer has a longitudinal dimension less than or equal to a column length of the time shift and integration matrix image sensor (21), wherein the longitudinal dimension of the optical fiber wafer and the column length are measured parallel to the translational drive direction of the plate (4) to be read.

7. Reading apparatus according to claim 6, wherein the optical fibers of the fiber optic wafer are at least partially made of a material adapted to selectively transmit phosphorescent radiation while intercepting a portion of the excitation light that has passed through the input window (20) of the readout unit (2).

8. Reading apparatus according to one of the preceding claims, **characterized in that** the stimulating means (1, 10; 10') and the readout unit (2) are such that the transverse band of the plate (4) to be read, imaged by the phosphorescent radiation and detected during a single passage of the plate through the reader, has a transverse extension of more than 20 mm, preferably more than 28 mm, perpendicular to a direction of translation of the plate.

9. Phosphor plate reader assembly, comprising:
- a phosphorescent plate reading apparatus according to any one of the preceding claims; and
- at least one phosphorescent plate (4) insertable into the reading apparatus, the plate comprising a layer (4a) of a phosphorescent material capable of generating phosphorescent radiation in response to stimulating light illuminating the phosphorescent material, the phosphorescent radiation and the stimulating light having different wavelengths, or in response to heating of the phosphorescent material in portions of the plate (4) previously exposed to image-recording radiation, the phosphorescent plate further comprising a layer (4b) of a material capable of reflecting the phosphorescent radiation, arranged parallel to the layer of phosphorescent material and located opposite the readout unit (2) when the plate (4) is inserted into the reading apparatus.

10. Method of reading a phosphor plate (4), the method comprising using a phosphor plate reader assembly according to claim 9 to read an image previously recorded on the plate on a first pass of the plate through the reading apparatus to capture a raw image of the plate formed by the phosphor radiation;
and the method further comprises at least one of the following two correction steps:
/i/ a camera defect removal process comprising re-using the reading apparatus with the same plate (4) in another pass of the plate through the reading apparatus performed after the first pass to capture a background image, and then subtracting the background image from the raw image; and
/ii/ a local correction process consisting in multiplying or dividing the intensities recorded by the readout unit (2) during the first pass of the plate (4) through the reading apparatus for points on the plate image by a response function having different values for a plurality of said points on the image.
